# EUROPÄISCHE PATENTANMELDUNG

(11) **EP 4 600 184 A1**
(43) Veröffentlichungstag der Anmeldung: **13.08.2025**
(21) Anmeldenummer: 24223364.1
(22) Anmeldetag: 27.12.2024
(51) Int. Cl.: B65G 41/00

(54) **MOBILES HALDENBAND**

(30) Priorität: 08.02.2024 DE 102024103593
(71) Anmelder: KLEEMANN GMBH, 73037 Göppingen (DE)
(72) Erfinder: BLESSING, Otto, 73566 Bartholomä (DE)
(74) Vertreter: Herrmann, Jochen

(57) **Zusammenfassung**

Die Erfindung betrifft ein mobiles Haldenband mit einer Fahreinheit (10) und einer damit verstellbar verbundenen Fördereinheit (20), wobei die Fördereinheit (20) eine Basiseinheit (21) mit zwei zueinander beabstandet angeordneten Tragstreben (23) aufweist, wobei zwischen den Tragstreben (23) ein Aufnahmebereich gebildet ist, in dem zumindest bereichsweise ein endlos umlaufendes Förderband geführt ist, wobei die Fördereinheit (20) ein Abwurfende (20.2) und im Bereich der Basiseinheit (21) ein Aufgabeende (20.1) bildet, zur Aufnahme von Schüttgut, und wobei im Bereich des Aufgabeendes (20.1) ein Ausgleichsgewicht (40) angeordnet ist. Um ein solches Haldenband leistungsfähig und bedienerfreundlich zu gestalten, ist es gemäß der Erfindung vorgesehen, dass das Ausgleichsgewicht (40) mittels einer Stelleinrichtung (30) in einer Stellbewegung zwischen einer dem Abwurfende (20.2) zugewandten ersten Stellposition und einer dem Abwurfende (20.2) abgewandten zweiten Stellposition verstellbar ist, und dass das Ausgleichsgewicht (40) mittels der Stelleinrichtung (30) außenseitig, dem Aufnahmeraum abgewandt auf einer der Tragstreben (23) befestigt ist.

## Beschreibung

Die Erfindung betrifft ein mobiles Haldenband mit einer Fahreinheit und einer damit verstellbar verbundenen Fördereinheit, wobei die Fördereinheit eine Basiseinheit mit zwei zueinander beabstandet angeordneten Tragstreben aufweist, wobei zwischen den Tragstreben ein Aufnahmebereich gebildet ist, in dem zumindest bereichsweise ein endlos umlaufendes Förderband geführt ist, wobei die Fördereinheit ein Abwurfende und im Bereich der Basiseinheit ein Aufgabeende bildet, und wobei im Bereich des Aufgabeendes ein Ausgleichsgewicht angeordnet ist.

Erfindungsgemäße mobile Haldenbänder werden eingesetzt, um ein Schüttgut auf einer Halde aufzuhäufen. Dabei wird das Schüttgut im Bereich des Aufgabeendes auf das Haldenband aufgegeben. Das endlos umlaufende Förderband fördert das Schüttgut dann hin zu dem Abwurfende, das gegenüber dem Aufgabeende in geodätisch größerer Höhe steht. Auf diese Weise kann das Schüttgut platzsparend auf die Halde aufgehäuft werden.

Um möglichst große Haldenhöhen verwirklichen zu können, kann es bei erfindungsgemäßen Haldenbändern vorgesehen sein, dass die Fördereinheit verstellbar mit der Fahreinheit verbunden ist. Auf diese Weise kann die Fördereinheit gegenüber der Fahreinheit in ihrer Neigung eingestellt werden. Somit kann das Abwurfende auf verschiedene Höhen eingestellt werden. Zudem kann das Haldenband mit seiner Fahreinheit verfahren werden, sodass auf einem vorgegebenen Flächenbereich die Halde entsprechend befüllt werden kann.

Um die vorgenannten Funktionalitäten verwirklichen zu können, steht das Abwurfende des Haldenbands deutlich über das Fahrwerk vor. Um zu vermeiden, dass es dabei zu einer Maschinen-Instabilität kommt, bei der die Gefahr besteht, dass das Haldenband kippt, wenn das Abwurfende zu stark mit Material beladen ist, ist die Überstandslänge begrenzt.

Es besteht nun die Möglichkeit die Verbesserung der Maschinenstabilität dadurch zu bewirken, dass die Fahrwerkslänge vergrößert wird. Hierdurch entstehen jedoch zusätzliche Herstellkosten. Größere Fahrwerkslängen, bei denen das Fahrwerk weiter in Richtung zum Aufgabeende vorsteht, sind mitunter auch nachteilig. Aufgrund des sich bei der Halde ergebenden Schüttkegels muss dann nämlich entweder das mobile Haldenband häufiger verfahren werden und/oder die maximal erreichbare Haldenhöhe ist begrenzt.

Zur Vermeidung einer Instabilität bei einem mobilen Haldenband schlägt DE 26 35 969 C2 die Verwendung eines Gegengewichts vor, das bedarfsweise am Aufgabeende des Haldenbands befestigt werden kann. Hierdurch entsteht während des Baustellenbetriebs ein Zusatzaufwand, der mitunter nicht akzeptiert wird und das Risiko von Fehlbedienungen erhöht. Das Gegengewicht ist im Bereich des Aufgabeendes angeordnet und steht hier rückseitig vor, um das nötige Drehmoment zur Stabilisierung des Haldenbands zu erzeugen. Dieser Überstand begrenzt den maximal möglichen Anstellwinkel des Haldenbands und damit die erreichbare Schütthöhe.

Es ist Aufgabe der Erfindung, ein leistungsfähiges Haldenband bereitzustellen, das bedienerfreundlich aufgebaut ist

Diese Aufgabe wird dadurch gelöst, dass das Ausgleichsgewicht mittels einer Stelleinrichtung in einer Stellbewegung zwischen einer dem Abwurfende zugewandten ersten Stellposition und einer dem Abwurfende abgewandten zweiten Stellposition verstellbar ist, und dass das Ausgleichsgewicht mittels der Stelleinrichtung außenseitig, dem Aufnahmeraum abgewandt auf einer der Tragstreben befestigt ist. Mittels der Stelleinrichtung kann das Ausgleichsgewicht zwischen wenigstens 2 Stellpositionen verstellt werden. Besteht die Gefahr, dass aufgrund einer Kopflastigkeit am Abwurfende eine Maschineninstabilität auftritt, so kann der Benutzer das Ausgleichsgewicht einfach in die erste Stellposition bewegen, in der es in Richtung zum Aufgabeende hin verstellt ist. Im einfachsten Fall ist das Ausgleichsgewicht zwischen nur 2 Stellpositionen verstellbar, wobei die zweite Stellposition eine Parkposition bildet. In diese kann das Ausgleichsgewicht gebracht werden, wenn es nicht benötigt wird, beispielsweise dann, wenn das Haldenband zur Verladung vorbereitet wird, um es an eine Baustelle zu transportieren. Dadurch dass das Ausgleichsgewicht mittels der Stelleinrichtung außenseitig auf der Tragstrebe befestigt ist, ist es für den Benutzer gut zugänglich und kann leicht von Hand verstellt werden. Infolge der seitlichen Anordnung kann eine kompakte Bauweise des Haldenbands beibehalten werden. Zudem wird die Neigungs-Verstellung der Fördereinheit des Haldenbands hierdurch nicht oder nur geringfügig beeinträchtigt.

Gemäß einer bevorzugten Erfindungsvariante kann es vorgesehen sein, dass an beiden Tragstreben außenseitig, dem Aufnahmeraum abgewandt jeweils ein Ausgleichsgewicht mittels jeweils einer Stelleinrichtung befestigt ist. Hierdurch ergibt sich eine bessere Gewichtsverteilung. Zudem wird die Ausgleichsmasse auf zwei Ausgleichsgewichte verteilt, die einzeln einfacher handhabbar sind.

Es ist jedoch auch möglich, dass beide Ausgleichsgewichte mit nur einer Stellbewegung verstellbar sind. Hierbei kann es beispielsweise dann vorgesehen sein, dass die Stellbewegung der beiden Ausgleichsgewichte mittels einer Synchronisationseinrichtung synchronisiert ist, um die Bedienung zu vereinfachen.

Eine mögliche Erfindungsvariante kann dergestalt sein, dass die Stelleinrichtung eine Führungsschiene aufweist, gegenüber der das Ausgleichsgewicht zwischen der ersten und der zweiten Stellposition mittels wenigstens einem Führungselement in Richtung der Längserstreckung der Führungsschiene, vorzugsweise linear, verstellbar ist. Somit bildet die Führungsschiene zusammen mit dem wenigstens einen Führungselement eine Schiebeführung, die eine einfache Verstellung des Ausgleichsgewichts ermöglicht.

Hierbei kann es insbesondere vorgesehen sein, dass das Ausgleichsgewicht einen Tragabschnitt aufweist, an dem zwei quer zur Längserstreckung der Führungsschiene in Schwerkraftrichtung zueinander beabstandet angeordnete, als Rollen ausgebildete Führungselemente angeordnet sind, und dass die Führungsschienen an gegenüberliegenden Seiten Rollenaufnahmen aufweisen, auf denen die Rollen abrollen. Eine der Rollen stützt dabei das Ausgleichsgewicht in Schwerkraftrichtung. Die andere Rolle verhindert ein Abheben entgegen der Schwerkraft-Richtung. Somit ist das Ausgleichsgewicht sicher an der Führungseinheit festgelegt.

Für die Stellvorrichtung kann ein einfacher Aufbau erreicht werden, wenn vorgesehen ist, dass die beiden Führungsschienen auf ihren einander zugewandten Seiten jeweils wenigstens eine Abkantung aufweisen, die in Richtung auf eine Längswand der Tragstreben vorstehen, dass die beiden Abkantungen mittels wenigstens eines Distanzstücks miteinander verbunden sind, und dass die Führungsschienen mittels der Abkantungen und/oder des wenigstens einen Distanzstücks mit der Längswand außenseitig verbunden, insbesondere verschweißt sind. Vorteilhafterweise können die Führungsschienen dabei als Gleichteile ausgebildet sein. Hierdurch lässt sich der Teile- und Montageaufwand verringern.

Eine mögliche Erfindungsvariante kann dergestalt sein, dass die Fördereinheit erste Fixieraufnahmen aufweist, die der ersten Stellposition zugeordnet sind und zweite Fixieraufnahmen aufweist, die der zweiten Stellposition zugeordnet sind, dass das Ausgleichsgewicht wenigstens ein Fixierelement aufweist, und dass das Ausgleichsgewicht in den beiden Stellpositionen quer zur Stellbewegung des Ausgleichsgewichts mittels des oder der Fixierelemente an den Fixieraufnahmen festlegbar, insbesondere formschlüssig festlegbar, ist. Mit dem Fixierelement(-en) und den Fixieraufnahmen kann der Benutzer das Ausgleichsgewicht in den beiden Stellpositionen zuverlässig arretierten, sodass eine unbeabsichtigte Verstellung verhindert ist. Beispielsweise kann es hierzu vorgesehen sein, dass die Fixieraufnahme Steckaufnahmen bilden. Das Fixierelement kann von einem Steckansatz, beispielsweise im einfachsten Fall von einem Bolzen oder einer Schraube gebildet sein, der/die in die Steckaufnahme eingesteckt oder eingeschraubt ist.

Eine Erfindungsalternative kann dergestalt sein, dass die Stellvorrichtung ein Scharnier mit einer Schwenkachse bildet, um das Ausgleichsgewicht in der Stellbewegung zwischen der ersten und der zweiten Stellposition um die Schwenkachse zu verschwenken. Somit kann die Veränderung der Stellposition durch ein einfaches Klappen des Ausgleichsgewichts vorgenommen werden. Eine solche Vorrichtung lässt sich besonders einfach von einem Benutzer bedienen. Vorzugsweise ist es so, dass die Schwenkachse so angeordnet ist, dass sich das Ausgleichsgewicht in beiden Stellpositionen jeweils seitlich an die Tragstrebe anlegt, um eine platzsparende Bauweise zu unterstützen.

Wenn vorgesehen ist, dass wenigstens ein Stützabschnitt an der Tragstrebe angebracht ist, der in der ersten oder der zweiten Stellposition das Ausgleichsgewicht an einer Formschlusskontur in Schwerkraftrichtung unterfängt, dann ist es in dieser Stellposition zusätzlich mit dem Stützabschnitt gehalten. Dies ist insbesondere bei auftretenden Schwingungen des Haldenbands vorteilhaft, da hierdurch die Stellvorrichtung entlastet wird.

Wenn vorgesehen ist, dass das Ausgleichsgewicht wenigstens zwei Teilgewichte aufweist, die miteinander lösbar verbunden sind, dann werden die Einsatzmöglichkeiten und die Bedienungsfreundlichkeit zusätzlich verbessert. Beispielsweise kann es dann vorgesehen sein, dass ein Benutzer bedarfsweise nur eines der beiden Teilgewichte an das Haldenband anbaut, um es auf seine Bedürfnisse anzupassen. Bei der Montage und Demontage ist das auf zwei Teilgewichte aufgeteilte Ausgleichsgewicht zudem einfacher zu handhaben.

Besonders bevorzugt ist eine Lösung, bei der vorgesehen ist, dass das Ausgleichsgewicht so angeordnet ist, dass es in keiner seiner Stellpositionen über das Aufgabeende der Fördereinheit rückseitig vorsteht. Auf diese Weise ist verhindert, dass das Ausgleichsgewicht im Bereich des Aufgabeendes die Neigungsverstellung der Fördereinrichtung behindert.

Eine bevorzugte Erfindungsvariante ist dergestalt, dass mit der Basiseinheit der Fördereinheit eine Verlängerung über eine Schwenkeinrichtung oder eine Teleskopiereinrichtung verbunden ist, dass die Verlängerung mittels der Schwenkeinrichtung oder der Teleskopiereinrichtung zwischen einer Parkposition und einer Arbeitsposition verstellbar ist, dass die Verlängerung in der Arbeitsposition das Abwurfende bildet, und dass in der Arbeitsposition das Ausgleichsgewicht in der ersten Stellposition angeordnet ist. In der Parkposition kann die Verlängerung platzsparend an die Basiseinheit angelegt, beispielsweise angeklappt, werden, sodass das Haldenband platzsparend transportiert werden kann. In der Arbeitsposition bildet die Verlängerung das Abwurfende, das weit auskragt. Um eine Maschineninstabilität zu vermeiden ist entsprechend das Ausgleichsgewicht in die erste Stellposition verbracht.

Eine mögliche Erfindungsvariante kann dergestalt sein, dass das oder die Ausgleichsgewichte mittels eines Stellantriebs, insbesondere motorisch, verstellt werden, wobei vorzugsweise eine Sensoreinrichtung und eine damit gekoppelte Steuereinheit vorgesehen sind, und dass die Steuereinrichtung eine Verstellung des wenigstens einen Ausgleichsgewichts von der ersten in die zweite Stellposition oder umgekehrt veranlasst, wenn die Sensoreinrichtung einen Auslöse-Betriebszustand erfasst. Auf diese Weise wird eine Fehlbedienung durch einen Benutzer ausgeschlossen. Über die Sensoreinrichtung wird der Auslöse-Betriebszustand erkannt. Dieser kann beispielsweise eine bestimmte Stellposition der Fördereinheit und/oder ein bestimmter Beladungszustand der Fördereinheit sein. Sobald die Sensoreinrichtung ein entsprechendes Signal aufnimmt, veranlasst die angeschlossene Steuereinheit die Verstellung des Auslösegewichts.

Es ist denkbar, dass die Fördereinheit eine Basis-Fördereinheit und wenigstens eine Teil-Fördereinheiten aufweist, wobei die Teil-Fördereinheit gegenüber der Basis-Fördereinheit von einer Transportposition in eine Betriebsposition verstellbar ist, insbesondere klappbar oder teleskopeierbar ist.

Eine mögliche Erfindungsvariante kann so sein, dass dann, wenn die Teil-Fördereinheit gegenüber der Basis-Fördereinheit verstellt wird, das Ausgleichsgewicht von der ersten in die zweite Stellposition und oder von der zweiten in die erste Stellposition verstellt wird. Dabei kann die Verstellung motorisch erfolgen. Denkbar ist es auch, dass eine mechanische Kopplung vorgesehen ist, mit der die Stellbewegung, beispielsweise der Teil-Fördereinheit, an das Ausgleichsgewicht übertragen wird.

Die Erfindung wird im Folgenden anhand von in den Zeichnungen dargestellten Ausführungsbeispielen näher erläutert. Es zeigen:
- Figur 1: in Seitenansicht ein Haldenband in einer ersten Betriebsposition,
- Figur 2: das Haldenband gemäß Figur 1 in einer zweiten Betriebsposition, hier der Transportposition,
- Figur 3: in perspektivischer Ansicht von hinten eine Stellvorrichtung mit einem daran angebrachten Ausgleichsgewicht,
- Figur 4: die Baueinheit gemäß Figur 3 in perspektivischer Ansicht von vorne,
- Figur 5: in perspektivischer Detaildarstellung eine Fördereinheit 20 des Haldenbands gemäß den Figuren 1 und 2 mit daran beidseitig angebrachten Ausgleichsgewichten,
- Figur 6: die Darstellung gemäß Figur 5, jedoch ohne Ausgleichsgewichte,
- Figur 7: eine vergrößerte Detaildarstellung der Fördereinheit gemäß Figur 5,
- Figur 8: in Einzeldarstellung und perspektivischer Ansicht ein Ausgleichsgewicht,
- Figur 9: in Seitenansicht ein Haldenband gemäß einer zweiten Ausgestaltungsvariante der Erfindung und in einer ersten Arbeitsposition,
- Figur 10: das Haldenband gemäß Figur 9 in einer zweiten Betriebsposition, hier der Transportposition,
- Figur 11: eine Fördereinheit des Haldenbands gemäß den Figuren 9 und 10 in vergrößerter Detaildarstellung und
- Figur 12: die Darstellung gemäß Figur 11 in einer veränderten Betriebsstellung.

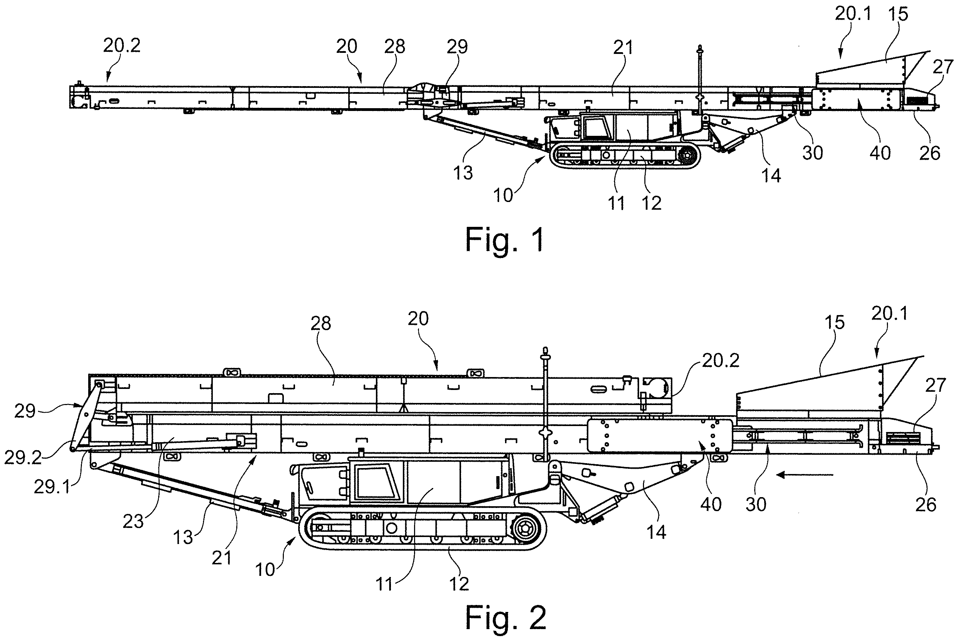

Figur 1 zeigt ein Haldenband mit einer Fahreinheit 10. Die Fahreinheit 10 besitzt ein Chassis 11, das von einem Fahrwerk 12 getragen wird. Das Fahrwerk 12 kann an einander gegenüberliegenden Seiten des Chassis 11 mit Rädern oder Kettenlaufwerken ausgestattet sein. In Figur 1 ist das Fahrwerk 12 mit Kettenlaufwerken ausgestattet, sodass sich in Figur 1 in der Bildebene von links nach rechts (bzw. umgekehrt) eine Hauptfahrtrichtung ergibt.

Es kann so sein, dass die Fahreinheit 10 eine Fördereinheit 20 verstellbar aufnimmt. Vorzugsweise ist es so, dass die Fördereinheit 20 mittels eines ersten Stellelements 13 und eines zweiten Stellelements 14 an die Fördereinheit 10 angekoppelt ist. Mittels der beiden Stellelemente 13 und 14 kann die Fördereinheit 20 in ihrer Arbeitsneigung verstellt werden. In Figur 1 ist eine Ausgangsstellung gezeigt, bei der die Fördereinheit 20 im Wesentlichen horizontal ausgerichtet ist. Bei einer Verstellung der Stellelemente 13, 14 kann die Arbeitsneigung der Fördereinheit 20 verstellt werden. Bevorzugt ist, wie im gezeigten Ausführungsbeispiel das erste Stellelement 13 in Fahrtrichtung vor der Fördereinheit 10 und das zweite Stellelement 14 in Fahrtrichtung hinter der Fördereinheit 10 angeordnet.

Die Fördereinheit 20 besitzt gemäß Figur 1 ein Aufgabeende 20.1 und gegenüberliegend ein Abwurfende 20.2. Der Fördereinheit 20 ist ein endlos umlaufendes Förderband zugeordnet, welches in den Zeichnungen der besseren Übersichtlichkeit halber nicht dargestellt ist. Mittels des endlos umlaufenden Förderbands kann Schüttgut, welches auf das Aufgabeende 20.1 aufgegeben wird, in einer Transportrichtung hin zum Abwurfende 20.2 transportiert werden, um eine Halde aufzuhäufen.

Um die Beladung des endlos umlaufenden Förderbands zu erleichtern kann im Bereich des Aufgabeendes 20.1 ein Aufgabetrichter 15 vorgesehen sein.

Die Fördereinheit 20 besitzt eine Basiseinheit 21, die vorzugsweise mittels der Stellelemente 13, 14, mit dem Chassis 11 der Fördereinheit 10 verbunden ist. Mit der Basiseinheit 21 kann eine Verlängerung 28 verbunden sein. Die Verlängerung 28 kann mittels einer Schwenkeinrichtung 29 mit der Basiseinheit 21 gekoppelt sein. Die Schwenkeinrichtung 29 weist einen Antrieb 29.1 und einen Hebelmechanismus 29.2 auf, auf den der Antrieb 29.1 einwirkt.

Mit der Schwenkeinrichtung 29 kann die Verlängerung 28 gegenüber der Basiseinheit 21 geklappt werden. Figur 2 zeigt eine Position, bei der die Verlängerung 28 an die Basiseinheit 21 angeklappt ist. Somit wird eine platzsparende Bauweise erreicht, um das Haldenband, beispielsweise auf einem Tieflader, transportieren zu können.

Figur 1 zeigt eine Betriebsposition, bei der mit dem Antrieb 29.1 der Hebelmechanismus 29.2 verstellt wurde, wobei der Hebelmechanismus 29.2 dabei die Verlängerung 28 in die aufgeklappte Lage bewegt.

Wie Figur 1 veranschaulicht, ist mit der Fördereinheit 20 ein Ausgleichsgewicht 40 verstellbar verbunden. Das Ausgleichsgewicht 40 ist zu diesem Zweck an eine Stellvorrichtung 30 angekoppelt. Die Stellvorrichtung 30 ermöglicht, dass das Ausgleichsgewicht 40 zwischen einer ersten Stellposition (siehe Figur 1) und einer zweiten Stellposition (siehe Figur 2) in einer Stellbewegung verstellt werden kann. Im vorliegenden Ausführungsbeispiel verläuft die Stellbewegung translatorisch, insbesondere linear, was in Figur 2 durch einen Pfeil symbolisiert ist.

In der ersten Stellposition ist das Ausgleichsgewicht 40 in Richtung zu dem aufgabeseitigen Ende hin verlagert. In der zweiten Stellposition ist das Ausgleichsgewicht 40 gegenüber der ersten Stellposition in Richtung hin zum Abwurfende 20.2 verstellt, wie Figur 2 veranschaulicht.

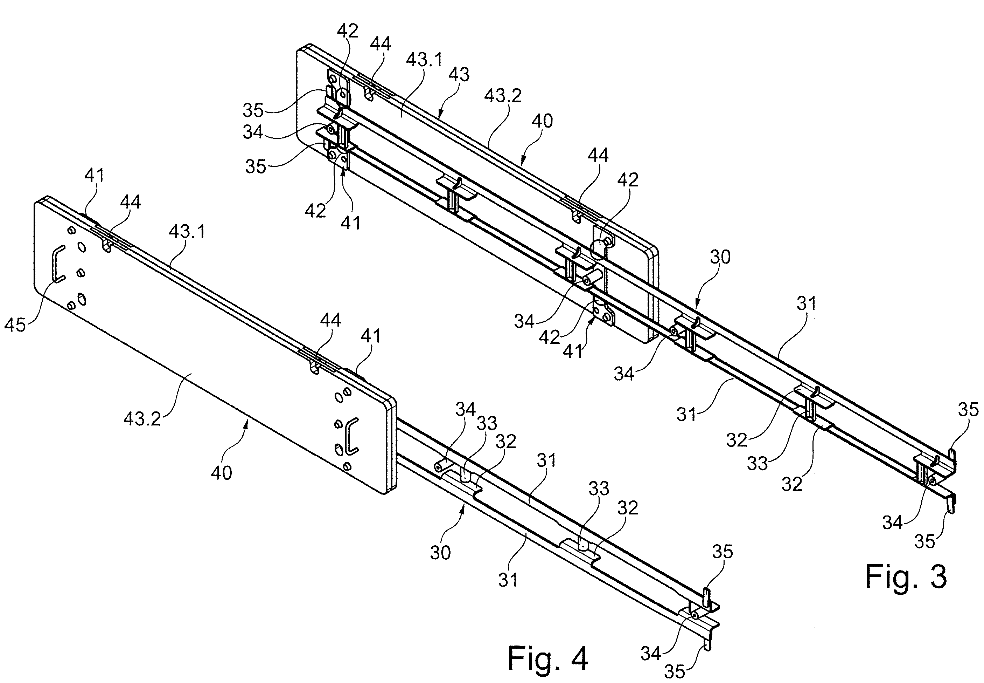

Die Figuren 3 und 4 zeigen den Aufbau der Stellvorrichtung 30. Wie diese Darstellung erkennen lassen, weist die Stellvorrichtung 30 wenigstens eine Führungsschiene 31 auf, an der das Ausgleichsgewicht 40 mittels eines Führungselements 42 in Stellrichtung verstellbar geführt ist.

Vorzugsweise ist es in Übereinstimmung mit den Figuren 3 und 4 vorgesehen, dass die Stellvorrichtung zwei zueinander in Schwerkraftrichtung beabstandete Führungsschienen 31 aufweist. Die beiden Führungsschienen 31 weisen an einander abgewandten Seiten Rollenaufnahmen auf, auf denen die als Rollen ausgebildeten Führungselemente 42 ablaufen. Die wenigstens eine untere Rolle verhindert, dass das Ausgleichsgewicht 40 entgegen der Schwerkraft-Richtung von der Stellvorrichtung 30 abhebt. Die wenigstens eine obere Rolle stützt das Ausgleichsgewicht 40 in Schwerkraftrichtung.

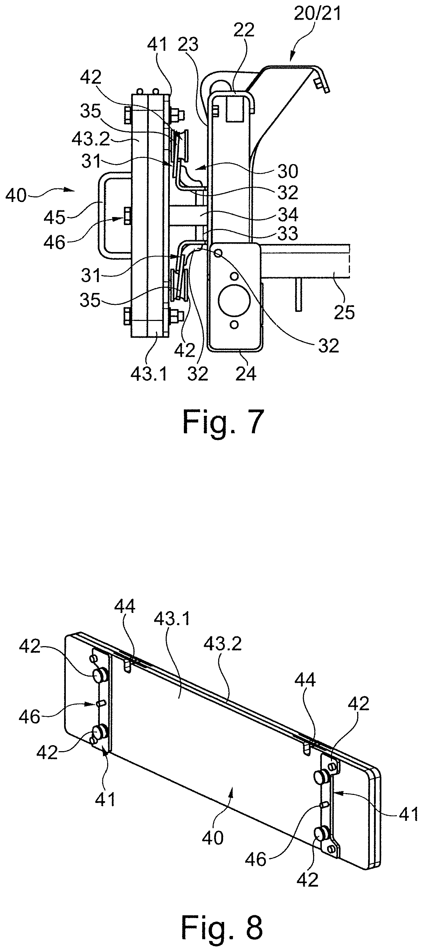

Vorzugsweise ist es so, dass die Rollen mit einer in Umfangsrichtung verlaufenden Profilierung versehen sind, sodass sie die als Steg ausgebildete Rollenaufnahme beidseitig übergreifenden. Somit ist das Ausgleichsgewicht 40 quer zu seiner Stellrichtung gesichert an der Stellvorrichtung 30 gehalten. Eine solche Konstruktion zeigt Figur 7.

Das Ausgleichsgewicht 40 kann mit wenigstens einem Tragabschnitt 41 ausgestattet sein, der als separates Bauteil ausgebildet sein kann.

Vorzugsweise sind zwei in Stellrichtung zueinander beabstandet angeordnete Tragabschnitte 41 verwendet. Der oder die Tragabschnitte 41 sind mit dem wenigstens einen Führungselement 42 ausgerüstet. Das Ausgleichsgewicht 40 ist mit dem Tragabschnitt 41 verbunden.

Vorzugsweise ist es so, dass das Ausgleichsgewicht 40 aus wenigstens zwei Teilgewichten 43.1, 43.2 zusammengesetzt ist. Im vorliegenden Ausführungsbeispiel ist es so, dass jedes der Teilgewichte 43.1, 43.2 plattenartig ausgebildet ist. Somit können die beiden Teilgewichte 43.1, 43.2 an ihren Längsseiten platzsparend aneinandergebaut werden, um das Ausgleichsgewicht 40 zu bilden. Selbstverständlich sind auch andere Formen der Teilgewichte 43.1, 43.2 denkbar.

Das Ausgleichsgewicht 40 besitzt wenigstens eine Tragöse 44. Mittels der Tragöse 44 kann das Ausgleichsgewicht 40 an ein Hebezeug angehangen werden, um es zu handhaben.

Es kann so sein, dass jedes der Teilgewichte 43.1, 43.2 eine solche Tragöse 44 aufweist, sodass die Teilgewichte 43.1, 43.2 separat gehandhabt werden können.

Auf seiner Außenseite trägt das Ausgleichsgewicht 40 einen Griff 45. An diesem kann das Ausgleichsgewicht 40 gegriffen und in Richtung der Stellbewegung des Ausgleichsgewichts 40 verschoben werden. Dies erleichtert die Bedienung.

Ausweislich Figur 3 kann es so sein, dass die Führungsschienen 31 Abkantungen 32 aufweisen. Im vorliegenden Ausführungsbeispiel weist jede der Führungsschiene 31, mehrere Abkantungen 32 auf. Die Abkantungen 32 sind von der Rollenaufnahme der Führungsschiene 31 in Richtung zu der Außenseite der Fördereinheit 20 hin abgewinkelt. Im Bereich der Abkantungen 32 können die Führungsschienen 31 vorzugsweise mit Distanzstücken 33 miteinander verbunden und zueinander parallel beabstandet gehalten werden. Denkbar ist es die Distanzstücke 33 mit den Abkantungen 32 zu verbinden, insbesondere zu verschweißen.

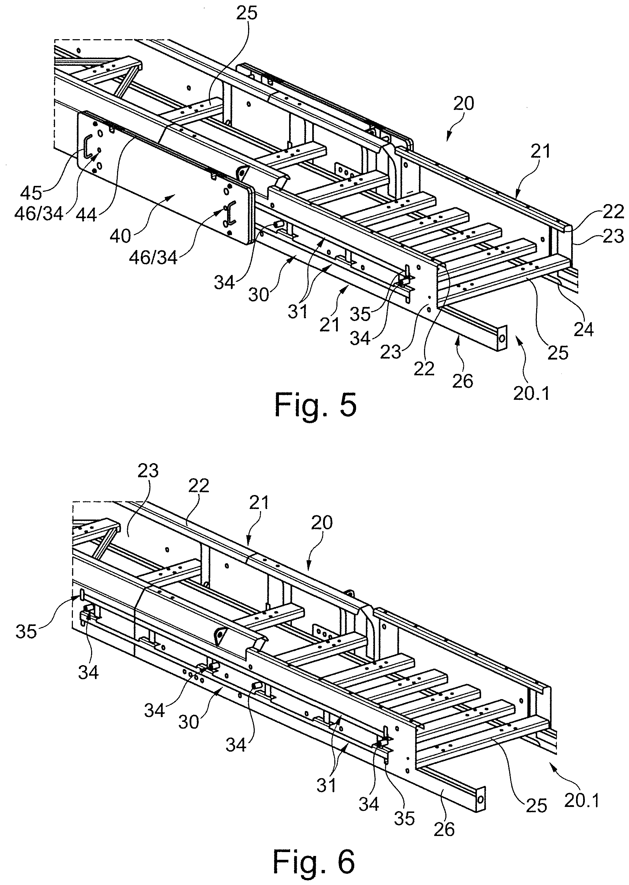

Die Figuren 5 und 6 zeigen, dass die Fördereinheit 20 zwei zueinander beabstandet angeordnete Tragstreben 23 aufweist, die über Querstreben 25 miteinander verbunden sind. Zwischen den beiden Tragstreben 23 ergibt sich ein Aufnahmebereich, innerhalb dem das endlos umlaufende Transportband zumindest bereichsweise aufgenommen ist. Weiterhin sind im Aufnahmebereich Stützrollen angeordnet, die vorzugsweise an den Tragstreben 23, drehbar gelagert sind. Die Stützrollen dienen dazu das endlos umlaufende Transportband, insbesondere den oberen Transporttrum des Transportbands zu stützen. An dem Abwurfende 20.2 kann eine Umlenkrolle vorgesehen sein, die den Transporttrum in den unteren, rücklaufenden Leertrum umlenkt. Die Umlenkrolle und die Stützrollen sind zur besseren Übersichtlichkeit nicht gezeigt.

Ausweislich Figur 7 sind von den Tragstreben 23 ein oberer Flansch 22 und/oder ein unterer Flansch 24 abgebogen, um eine Profilaussteifung zu erreichen. Figur 7 veranschaulicht auch, dass die Stellvorrichtung 30 mit der Tragstrebe 23 außenseitig verbunden ist. Hierbei kann es so sein, dass die Stellvorrichtung 30 mit der Tragstrebe 23 verschweißt ist. Beispielsweise kann es so sein, dass die Stellvorrichtung 30 mit ihren Distanzstücken 33 und/oder ihren Abkantungen 32 außenseitig auf die Tragstrebe 23 aufgeschweißt ist.

Die Darstellung zeigt auch, dass die Führungsschienen 31 somit beabstandet zu der Außenseite der Tragstrebe 23 angeordnet ist, sodass die Führungselemente 42 frei verstellbar sind.

Ausweislich Figur 8 besitzt das Ausgleichsgewicht 40 wenigstens ein Fixierelement 46. Figur 6 veranschaulicht, dass an der Tragstrebe 23 wenigstens eine erste Fixieraufnahme 34 angeordnet ist, die der ersten Stellposition zugeordnet ist und wenigstens eine zweite Fixieraufnahme 34, die der zweiten Stellposition zugeordnet ist. Im vorliegenden Ausführungsbeispiel sind den beiden Stellpositionen jeweils zwei Fixieraufnahmen 34 zugeordnet.

Befindet sich das Ausgleichsgewicht 40 in der in Figur 5 gezeigten zweiten Stellposition, so wird das Ausgleichsgewicht 40 mit seinem wenigstens einen Fixierelement 46 an der zweiten Fixieraufnahme 34 festgelegt. Beispielsweise kann es so sein, dass das Fixierelement 46 eine Schraube ist, die in die Fixieraufnahme 34 eingeschraubt wird. Denkbar ist es auch, dass das Fixierelement 46 einen Bolzen bildet, der in die Fixieraufnahme 34 eingesteckt ist. Werden das oder die Fixierelemente 46 aus den zugeordneten Fixieraufnahmen 34 gelöst, so kann das Ausgleichsgewicht 40 längs der Führungsschienen 31 mittels der Führungselemente 42 verstellt werden, bis es in die erste Stellposition gelangt, die in Figur 1 gezeigt ist. Dann lässt sich das Ausgleichsgewicht 40 mittels des wenigstens einen Fixierelements 46 an der wenigstens einen ersten Fixieraufnahme 34, die der ersten Stellposition zugeordnet ist, befestigen.

Um eine eindeutige Positionierung des Ausgleichsgewichts 40 in der ersten und/oder zweiten Stellposition zu ermöglichen, kann es vorgesehen sein, dass wenigstens ein Anschlag 35 verwendet ist, an dem das Ausgleichsgewicht 40 in der jeweiligen Stellposition anschlägt. Dabei kann es dann insbesondere auch so sein, dass jeweils die Fixieraufnahme 34 auf das zugeordnete Fixierelement 46 ausgerichtet ist.

In den Figuren 5 und 6 ist auch veranschaulicht, dass es vorteilhaft so sein kann, dass an die Tragstreben 23 einteilig Halter 26 angeformt sind, an denen eine Antriebseinheit 27 (siehe Figuren 1 und 2) befestigt werden kann. Die Antriebseinheit 27 dient zum Antrieb des endlos umlaufenden Förderbands.

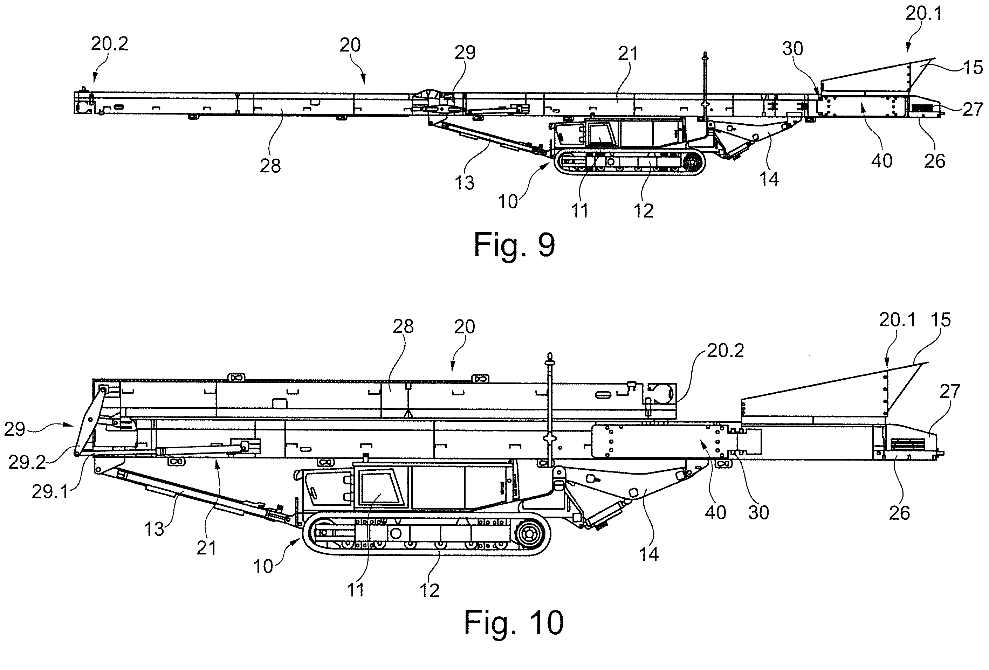

Eine weitere Ausgestaltungsvariante der Erfindung ist in den Figuren 9-12 veranschaulicht. In diesem Ausführungsbeispiel sind gleiche Bauteile mit gleichen Bezugszeichen versehen, weswegen zur Vermeidung von Wiederholungen auf die vorstehenden Ausführungen Bezug genommen werden kann. Nachfolgend wird daher nur auf die Unterschiede eingegangen.

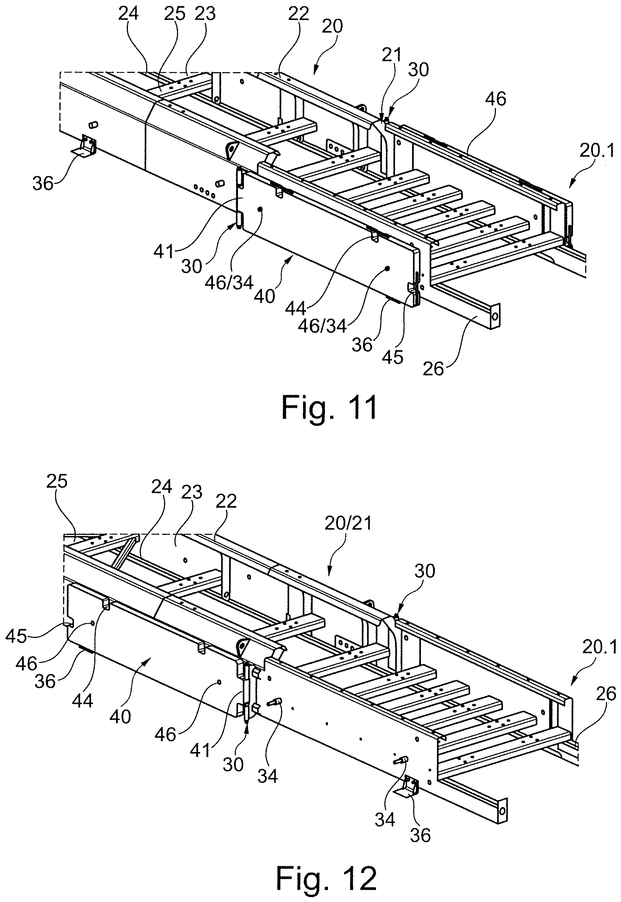

Wie die Darstellungen veranschaulichen, weist die Stellvorrichtung 30 zur Verstellung des Ausgleichsgewichts 40 ein Scharnier auf. Dabei kann es so sein, dass das erste Scharnierelement des Scharniers außenseitig an der Tragstrebe 23 und das zweite Scharnierteil an einem Tragabschnitt 41 des Ausgleichsgewichts 40 angeordnet ist. Die beiden Scharnierteile werden über eine Scharnierachse miteinander verbunden. Ausweislich der Figuren 11 und 12 kann es so sein, dass die Scharnierachse parallel zu der Außenseite der Tragstrebe 23 und weiterhin vorzugsweise die Scharnierachse senkrecht zur Längserstreckung der Tragstrebe 23 verläuft.

Das Ausgleichsgewicht 40 kann mittels der Scharnierverbindung zwischen der in Figur 11 gezeigten ersten Betriebsposition und der in Figur 12 gezeigten zweiten Betriebsposition rotatorisch verschwenkt werden, insbesondere gegenüber der Tragstrebe 23 geklappt werden. In der ersten Betriebsposition ist das Ausgleichsgewicht 40 dem Aufgabeende 20.1 zugewandt. In der zweiten Betriebsposition ist das Ausgleichsgewicht 40 so verstellt, dass es dem Abwurfende 20.2 zugewandt ist.

Denkbar ist es auch, dass das Ausgleichsgewicht 40 durch mehrfaches Umschlagen um mehr als eine Umschlaglänge, insbesondere eine Gewichtslänge, verstellt werden kann.

Beispielsweise kann es so sein, dass das Ausgleichsgewicht 40 mittels der Scharnierverbindung zwischen der in Figur 11 gezeigten 1. Betriebsposition und der in Figur 12 gezeigten zweiten Betriebsposition rotatorische geschwenkt werden kann. Dann wird auf der der Scharnierverbindung abgewandten Seite des Ausgleichsgewichts 40 eine weitere Scharnierverbindung hergestellt. Dies kann beispielsweise so erfolgen, dass das Ausgleichsgewicht 40 an dieser Seite ein Scharnierteil, beispielsweise ein Lagerauge, bildet, das in Deckung mit einem weiteren Scharnierteil der Basiseinheit (beispielsweise der Tragstrebe 23) kommt. Dann kann die zuvor gebildete erste Scharnierverbindung gelöst werden. Nun lässt sich das Ausgleichsgewicht ein weiteres Mal um die neu gebildete zweite Scharnierverbindung schwenken. Denkbar ist es das ein solches Umschlagen auch mehrere Male erfolgen kann, um das Ausgleichsgewicht 40 geeignet einzustellen.

Auch wie bei dem Ausführungsbeispiel gemäß den Figuren 1-9 kann es wieder so sein, dass das Ausgleichsgewicht 40 mittels einem oder mehreren Fixierelementen 46, die in eine oder mehrere Fixieraufnahmen 34 der Stellvorrichtung 30 eingreifen, in der jeweiligen Stellposition gesichert wird.

Bei den in den Zeichnungen dargestellten Ausführungsbeispielen können beidseitig an der Fördereinheit 20 jeweils wenigstens ein Ausgleichsgewicht 40 befestigt werden. Vorzugsweise ist es so, dass die Ausgleichsgewichte 40 dabei über vorzugsweise baugleiche oder im Wesentlichen baugleiche Stellvorrichtungen 30 an die Tragstreben 23 angebunden sind, um den Teileaufwand zu verringern.

Figur 11 und 12 veranschaulicht, dass es bei allen gezeigten Ausführungsbeispielen auch so sein kann, dass die Fördereinheit 20 wenigstens einen Stützabschnitt 36 aufweist, der einer der beiden Stellpositionen zugeordnet ist. Vorzugsweise sind beiden Stellpositionen zumindest ein Stützabschnitt 36 zugeordnet. Das Ausgleichsgewicht 40 stützt sich in der zugeordneten Stellposition in Schwerkraftrichtung an dem Stützabschnitt 36 ab, um die Stellvorrichtung 30 zu entlasten.

## Patentansprüche

1. Mobiles Haldenband mit einer Fahreinheit (10) und einer damit verstellbar verbundenen Fördereinheit (20), wobei die Fördereinheit (20) eine Basiseinheit (21) mit zwei zueinander beabstandet angeordneten Tragstreben (23) aufweist, wobei zwischen den Tragstreben (23) ein Aufnahmebereich gebildet ist, in dem zumindest bereichsweise ein endlos umlaufendes Förderband geführt ist, wobei die Fördereinheit (20) ein Abwurfende (20.2) und im Bereich der Basiseinheit (21) ein Aufgabeende (20.1) bildet, zur Aufnahme von Schüttgut, und wobei im Bereich des Aufgabeendes (20.1) ein Ausgleichsgewicht (40) angeordnet ist, **dadurch gekennzeichnet,**
**dass** das Ausgleichsgewicht (40) mittels einer Stelleinrichtung (30) in einer Stellbewegung zwischen einer dem Abwurfende (20.2) zugewandten ersten Stellposition und einer dem Abwurfende (20.2) abgewandten zweiten Stellposition verstellbar ist, und dass das Ausgleichsgewicht (40) mittels der Stelleinrichtung (30) außenseitig, dem Aufnahmeraum abgewandt auf einer der Tragstreben (23) befestigt ist.

2. Mobiles Haldenband nach Anspruch 1, **dadurch gekennzeichnet, dass** an beiden Tragstreben (23) außenseitig, dem Aufnahmeraum abgewandt jeweils ein Ausgleichsgewicht (40) mittels jeweils einer Stelleinrichtung (30) befestigt ist.

3. Mobiles Haldenband nach Anspruch 2, **dadurch gekennzeichnet, dass** die Stellbewegung der beiden Ausgleichsgewichte (40) mittels einer Synchronisationseinrichtung synchronisiert ist.

4. Mobiles Haldenband nach einem der Ansprüche 1 bis 3, **dadurch gekennzeichnet, dass** die Stelleinrichtung (30) eine Führungsschiene (31) aufweist, gegenüber der das Ausgleichsgewicht (40) zwischen der ersten und der zweiten Stellposition mittels wenigstens einem Führungselement (42) in Richtung der Längserstreckung der Führungsschiene (31), vorzugsweise translatorisch, insbesondere linear, verstellbar ist.

5. Mobiles Haldenband nach Anspruch 4, **dadurch gekennzeichnet, dass** das Ausgleichsgewicht (40) einen Tragabschnitt (41) aufweist, an dem zwei quer zur Längserstreckung der Führungsschiene (31) in Schwerkraftrichtung zueinander beabstandet angeordnete, als Rollen ausgebildete Führungselemente (42) angeordnet sind, und dass die Führungsschienen (31) an gegenüberliegenden Seiten Rollenaufnahmen aufweisen, auf denen die Rollen abrollen.

6. Mobiles Haldenband nach einem der vorhergehenden Ansprüche, **dadurch gekennzeichnet, dass** die beiden Führungsschienen (31) auf ihren einander zugewandten Seiten jeweils wenigstens eine Abkantung (32) aufweisen, die in Richtung auf eine Längswand der Tragstreben (23) vorstehen, dass die beiden Abkantungen (32) mittels wenigstens eines Distanzstücks (33) miteinander verbunden sind, und dass die Führungsschienen (31) mittels der Abkantungen (32) und/oder des wenigstens einen Distanzstücks (33) mit der Längswand außenseitig verbunden, insbesondere verschweißt, sind, und dass vorzugsweise die Führungsschienen als Gleichteile ausgebildet sind.

7. Mobiles Haldenband nach einem der Ansprüche 1 bis 6, **dadurch gekennzeichnet, dass** die Fördereinheit (20) erste Fixieraufnahmen (34) aufweist, die der ersten Stellposition zugeordnet sind und zweite Fixieraufnahmen (34) aufweist, die der zweiten Stellposition zugeordnet sind, dass das Ausgleichsgewicht (40) wenigstens ein Fixierelement (46) aufweist, und dass das Ausgleichsgewicht in den beiden Stellpositionen quer zur Stellbewegung des Ausgleichsgewichts mittels des oder der Fixierelemente (46) an den Fixieraufnahmen festlegbar, insbesondere formschlüssig festlegbar ist.

8. Mobiles Haldenband nach einem der Ansprüche 1 bis 7, **dadurch gekennzeichnet, dass** die Stellvorrichtung (30) ein Scharnier mit einer Schwenkachse bildet, um das Ausgleichsgewicht (40) in der Stellbewegung zwischen der ersten und der zweiten Stellposition um die Schwenkachse zu verschwenken, insbesondere auf Umschlag zu verschwenken.

9. Mobiles Haldenband nach Anspruch 8, **dadurch gekennzeichnet, dass** das Ausgleichsgewicht (40) durch mehrfaches Umschlagen um mehr als eine Umschlaglänge, insbesondere um mehr als eine Gewichtslänge, verstellbar ist.

10. Mobiles Haldenband nach einem der Ansprüche 1 bis 9, **dadurch gekennzeichnet, dass** wenigstens ein Stützabschnitt (36) an der Tragstrebe (23) angebracht ist, der in der ersten oder der zweiten Stellposition das Ausgleichsgewicht (40) an einer Formschlusskontur in Schwerkraftrichtung unterfängt.

11. Mobiles Haldenband nach einem der Ansprüche 1 bis 10, **dadurch gekennzeichnet, dass** das Ausgleichsgewicht (40) wenigstens zwei Teilgewichte (43.1, 43.2) aufweist, die miteinander lösbar verbunden sind.

12. Mobiles Haldenband nach einem der Ansprüche 1 bis 11, **dadurch gekennzeichnet, dass** das Ausgleichsgewicht (40) so angeordnet ist, dass es in keiner seiner Stellpositionen über das Aufgabeende der Fördereinheit (20) rückseitig vorsteht.

13. Mobiles Haldenband nach einem der Ansprüche 1 bis 12, **dadurch gekennzeichnet, dass** mit der Basiseinheit (21) der Fördereinheit (20) eine Verlängerung (28) über eine Schwenkeinrichtung (29) oder eine Teleskopiereinrichtung verbunden ist, dass die Verlängerung (28) mittels der Schwenkeinrichtung (29) oder der Teleskopiereinrichtung zwischen einer Parkposition und einer Arbeitsposition verstellbar ist, dass die Verlängerung (28) in der Arbeitsposition das Abwurfende (20.2) bildet, und dass in der Arbeitsposition das Ausgleichsgewicht (40) in der ersten Stellposition angeordnet ist.

14. Mobiles Haldenband nach einem der Ansprüche 1 bis 13, **dadurch gekennzeichnet, dass** die Fahreinheit (10) ein Chassis (11) aufweist, das von einem Fahrwerk (12) getragen ist, dass die Fördereinheit (20) mittels eines in Fahrtrichtung vorderen Stellelements (13) und einem in Fahrtrichtung hinteren Stellelements (14) mit dem Chassis (11) schwenkbar verbunden ist, um die Neigung der Fördereinheit (20) zu verändern, und dass die Förderrichtung des endlos umlaufenden Förderbands in Fahrtrichtung des Fahrwerks, vorzugsweise senkrecht zu den Radachsen des Fahrwerks und/oder in Laufrichtung von Kettenlaufwerken des Fahrwerks (12), verläuft.

15. Mobiles Haldenband nach einem der Ansprüche 1 bis 14, **dadurch gekennzeichnet, dass** das oder die Ausgleichsgewichte (40) mittels eines Stellantriebs motorisch verstellt werden, wobei vorzugsweise eine Sensoreinrichtung und eine damit gekoppelte Steuereinheit vorgesehen sind, und dass die Steuereinrichtung eine Verstellung des wenigstens einen Ausgleichsgewichts (40) von der ersten in die zweite Stellposition oder umgekehrt veranlasst, wenn die Sensoreinrichtung einen Auslöse-Betriebszustand erfasst.
